# EUROPEAN PATENT APPLICATION

(11) **EP 4 257 834 A1**
(43) Date of publication of application: **11.10.2023**
(21) Application number: 23167030.8
(22) Date of filing: 06.04.2023
(51) Int. Cl.: F16B 25/00, H01R 4/34, H01R 13/44, H01R 4/70, H01R 11/28

(54) **SCREW FOR A TOUCH-PROOF PLUG CONNECTION**

(30) Priority: 08.04.2022 DE 102022108585
(71) Applicant: TE Connectivity Germany GmbH, 64625 Bensheim (DE)
(72) Inventor: BUCHHOLZ, Ron, 64625 Bensheim (DE); EHEIM, Manuel, 64625 Bensheim (DE); WEBER, Alexander, 64625 Bensheim (DE); WOLF, Marcus, 64625 Bensheim (DE); HOFFMANN, Bjoern, 64625 Bensheim (DE); DISTLER, Patrick, 64625 Bensheim (DE)
(74) Representative: Grünecker Patent- und Rechtsanwälte PartG mbB

(57) **Abstract**

The present invention relates to a screw (1) for a touch-proof plug connection (3) comprising a screw body (11) and a touch protection element (22), where the screw body (11) comprises a screw head (12) and a screw shank (14) originating from the screw head (12) and extending along a screw-in direction (E) up to a screw tip (13). In order to provide a screw (1) that can be used flexibly and at the same time is robust, safe, and easy to handle, a connecting element (24) is formed at the screw tip (13), where the touch protection element (22) is provided on a coupling side (26) with at least one connection device (27) which is configured as a connection counterpart to the connecting element (24) for connecting the touch protection element (22) to the screw body (11), and where the touch protection element (22) has at least on a front side (32) an electrically insulating surface which in the connected state of the screw body (11) and the touch protection element (22) points in the screw-in direction (E).

## Description

The present invention relates to a screw for a touch-proof plug connection, in particular for an electrical connector, comprising a screw body and a touch protection element, where the screw body comprises a screw shank originating from the screw head and extending along a screw-in direction up to a screw tip.

The invention furthermore relates to an electrical connector that comprises an electrically insulating connector housing, a contact element, and a fastening screw. The present invention additionally relates to an electrical plug connection comprising the electrical connector as well as an electrical mating connector.

Electrical plug connections with a screw for a screw connection of the connector and the mating connector are known from prior art. The screw connection ensures robust and stable contacting. Such plug connections are used, for example, in the automotive sector, where the plug connections must be resistant to withstand vibrations and high temperatures. Particularly high demands are placed on electrical plug connections that are used in the high-voltage range where they are exposed to high currents and voltages. Such high-voltage connectors are used in the automotive sector, among other things, in electric and/or hybrid vehicles, in order to reliably contact e.g. battery modules of a traction battery as well as other high-voltage connection points outside of the battery. In order to ensure that the plug connections are handled safely during assembly or during inspection or a service, respectively, such plug connections are configured to be touch-proof. The touch-proof nature ensures that a human finger cannot unintentionally contact current-carrying elements so that plug connections of this type can be handled easily and safely.

For example, screwable high-voltage plug connections are known which are configured to be touch-proof with regard to IPxxB according to ISO 20653 which creates a very robust contact that is easy to handle in the typical production environment.

The screws of such plug connections are typically secured against accidental contact both at the screw head and at the screw tip.

However, different geometric framework conditions are given depending on the type of vehicle and battery configuration so that a screw with a specifically adapted geometry has to be manufactured for each application. Different tools are required for screws of different lengths, and the prior art touch-proof screws are designed only for a specific plug connection and cannot be used elsewhere.

It is therefore an object of the present invention to provide a screw for a touch-proof plug connection that can be used flexibly and at the same time is robust, safe, and easy to handle.

This object is satisfied by a screw according to the invention for a touch-proof plug connection comprising a screw body and a touch protection element. The screw body comprises a screw head and a screw shank originating from the screw head and extending along a screw-in direction up to a screw tip. A connecting element is formed at the screw tip and the touch protection element is provided on a coupling side with at least one connection device which is configured as a connection counterpart to the connecting element. The connection device is configured to connect the touch protection element to the screw body, where the touch protection element has an electrically insulating surface at least on a front side. In the connected state, i.e. when the screw body and the touch protection element are assembled, the front side points in the screw-in direction.

Furthermore, this object is satisfied by an electrical connector which is according to the invention for an electrical plug connection, in particular a high-current and/or high-voltage plug connection of the type mentioned at the outset, and which comprises a touch-protected screw according to the invention. An electrical plug connection for high-current and/or high-voltage contacting, in particular in the vehicle sector, solves this object in that it comprises at least one connector according to the invention and a mating connector.

The touch-proof screw according to the invention has the advantage that its two-part structure consisting of a screw body and a touch protection element that can be connected to the screw body provides a flexible system in which substantially standardized screws can be used that only need to be provided with a connecting element at their screw tip. The adaptation to different geometries of connectors or plug connections, respectively, as used in different vehicles, can be implemented in the touch protection element independently of the screw. In addition, the screw body can also be used as a screw without the touch protection element. The screw is robust and easy to manufacture due to the connection counterpart, by way of which the touch protection element can be connected to the screw body. Due to the two-part design, the screw offers great variation possibilities and a high degree of flexibility at the same time.

The invention can be further improved by the following embodiments which are advantageous by themselves and which may be arbitrarily combined with one another.

According to one possible embodiment, the touch protection element can be connected to the screw body by way of a positive-fit, frictionally engaged and/or adhesive bond/positive substance-fit connection between the connection device and the connecting element. The connection device of the touch protection element and the connecting element of the screw body can represent complementary connection counterparts that can be joined using common production techniques, i.e. can be connected to one another at a joint. With the connection, the touch protection element can be fixed axially in the screw-in direction on the screw body. The connection can be a stationary connection which prevents both the displacement of the touch protection element in the axial direction along the screw-in direction relative to the screw body as well as the radial motion perpendicular to the screw-in direction. Complete fixation, which does not allow for any relative motion of the touch protection element connected to the screw body, is also possible.

The connection between the connecting element of the screw body and the connection device of the touch protection element is very simple if the coupling side of the touch protection element is oriented in a direction opposite to the front side. Due to the spatial distance of the electrically insulating front side of the touch protection element, on the one hand, and the coupling side provided for connection to the connecting element, on the other hand, there is a large degree of freedom of configuration both in the shape and sizing of the insulating front side as well as in the configuration of the at least one connection device.

The connection counterparts, i.e. the connection device and the connecting element, can be configured such that when joined, i.e. in the connected state, the touch protection element is aligned along the screw-in direction. The touch protection element can be aligned in the screw-in direction flush with the screw shank. The touch protection element can be sized such that, when viewed in the screw-in direction, it does not protrude laterally beyond the screw shank when in the state connected to the screw body. This ensures that the screw according to the invention, in which the touch protection element is connected to the screw body, can be screwed in and the touch protection element does not impair the screw connection between the screw and its mating thread.

The connecting element and the connection device can be complementary connection counterparts of a force-fit connection. The force-fit connection can be, for example, a press connection with a press fit or a trilobular fit in which one of the connection counterparts has a trilobular cross section which can be pressed in a frictionally engaging manner into a corresponding opening of the connection counterpart. In another embodiment, one of the connection counterparts can be configured as a Morse taper which enables reliable surface pressure.

According to a further embodiment, the connecting element and the connection device can be parts of a releasable connection. The touch protection element can then be releasable connected to the screw body. This is advantageous for maintenance purposes and allows for an element of the screw according to the invention, for example the screw body, to be reused in a different application environment. Connection counterparts of a positive-fit and/or force-fit connection, for example, screw connections or latchings, are suitable as releasable connection counterparts.

In one embodiment, the screw tip can comprise a cavity for receiving the coupling side of the touch protection element, as a result of which a particularly compact screw is obtained. The connecting element can be arranged in the cavity, which is advantageous in that the joint with the two connection counterparts is not accessible from the outside and is therefore protected. Configurations in which the connecting element is formed on the screw tip, for example, in that a projection with the connecting element is present on the screw tip, are also conceivable. This projection can protrude from the screw tip in the screw-in direction.

The connecting element can comprise a thread or a latching device for a positive-fit connection. Snap connections/latchings can be implemented with latching devices and can connect the touch protection element to the screw body in a releasable or non-releasable manner in a simple, positive-fit way. For example, the screw tip can comprise an axial stop behind which a complementary latching hook can engage in a direction opposite to the screw-in direction and thereby realize a positive-fit snap or latch connection. Of course, the complementary connection counterparts, the connecting element of the screw body, and the connection device of the touch protection element can always be configured the other way around, even if this is not explicitly described in the present description. For example, the touch protection element could therefore also have a latch stop, for example, a back taper, in which a connecting element of the screw body configured as a latching hook can engage and form a snap connection.

According to a further embodiment, the screw tip can have a cavity with an internal thread. This cavity can be configured, for example, as a blind bore hole thread which is formed originating from the screw tip in a direction opposite to the screw-in direction into the screw body. Such a cavity with an internal thread is easy to manufacture, even with standardized screw bodies. The touch protection element can comprise a complementary connecting element in the form of a coupling side with an external thread which can be connected to such a connecting element in a positive-fit and force-fit manner. Such a screw connection offers a robust, reliable, yet repeatedly releasable connection option between the contact element and the screw body.

In a further embodiment, the touch protection element can comprise a touch protection body which is coated with an electrically insulating material at least on the front side. This configuration increases the flexibility of the screw according to the invention. The touch protection body can be optimized in terms of its material properties, for example, with regard to possible impedances. The main function, namely touch protection, is ensured by the front side that is covered with the electrical material. In this embodiment, the touch protection body can be configured independently of the electrically insulating material as long as a front side is coated with an electrically insulating material. In order to cover the front side with an electrically insulating material, this front side can either be coated with an electrically insulating material or have it be cast over, for example, in an injection molding process. The front side can also be covered by a separate insulating element, which shall be discussed in more detail hereafter.

A particularly secure connection and good heat dissipation as well as influence of the impedance can be obtained when the touch protection body is made from metal.

In one embodiment, the touch protection body can be a threaded rod whose thread on the coupling side represents the connection device. This is a cost-effective solution, in particular when using a threaded rod of standard industry dimensions and materials as the touch protection body.

In a further embodiment, the touch protection body can be covered on all sides by the electrically insulating material which ensures particularly effective touch protection at the screw tip for the reason that the touch protection is not only electrically insulated on the front side, but also on the flanks of the touch protection body up to the coupling region. The touch protection body can also be made of an electrically insulating material, e.g. be formed monolithically from the electrically insulating material, which also enables particularly effective touch protection in the region of the screw tip.

In a further embodiment, the touch protection element can comprise an insulating element that can be attached to the front side of the touch protection body. The insulating element can be connected in a positive-fit and/or force-fit manner to the touch protection body. The insulating element can be releasably connected to the touch protection body, for example, screwed or latched thereto. The options described above with regard to the connection between the connecting element of the screw body and the connection device of the touch protection element can be considered, among other things, as joining elements for producing the connection between the insulating element and the touch protection element. The insulating element can there be provided with an attachment device which is configured to connect the insulating element to the touch protection body. The attachment device can be, for example, a latching hook, a thread, or an element of a press fit.

According to one embodiment, the insulating element can be an insulating cap. Such an insulating cap can be configured to cover at least the front side of the touch protection body. The insulating body can be configured, in particular, to cover in an electrically insulating manner not only the front side but also the flanks of the touch protection body adjoining the front side. The insulating cap can be provided with an internal thread, which represents a complementary connection device to a touch protection body in the form of a threaded rod.

The invention shall be described hereafter by way of example using embodiments with reference to the appended figures. Elements in the figures that correspond to one another in terms of structure and/or function are provided with the same reference characters.

The combinations of features shown and described in the individual embodiments are for explanatory purposes only. In accordance with the above explanations, features of the embodiment can be omitted if this technical effect associated is of no significance for a particular application. Conversely, in accordance with the above explanations, a further feature can be added in an embodiment should its technical effect be advantageous for a particular application, where:
- Fig. 1: shows a schematic sectional view of an electrical plug connection according to the invention in a connected state with a connector according to the invention which comprises a screw according to the invention of a first embodiment;
- Fig. 2: shows a schematic sectional view of a connector according to the invention with a screw according to the invention of a further embodiment;
- Figs. 3A and B: show the elements of the fastening screw from Figure 1 with a screw body illustrated in a schematic perspective view as well as a sectional view of the parts of the touch protection element in the state prior to assembly (Figure 3A) as well as a detail of this screw in the assembled state (Figure 3B);
- Fig. 4: shows a detail of a fastening screw according to the invention according to a further embodiment;
- Fig. 5: shows a schematic view of a touch protection element according to a further embodiment; and
- Fig. 6: shows a detail of a further embodiment of the fastening screw according to the invention in a schematic sectional view.

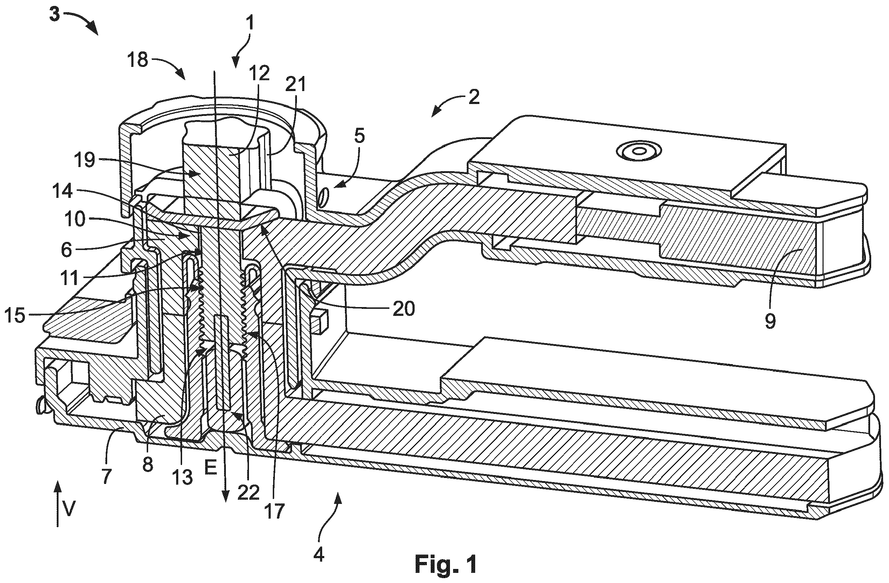

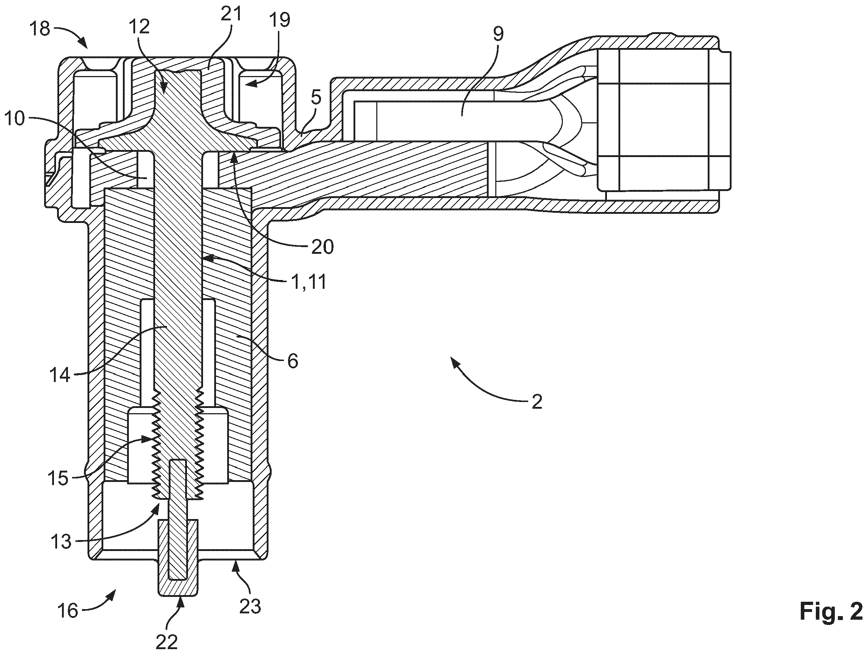

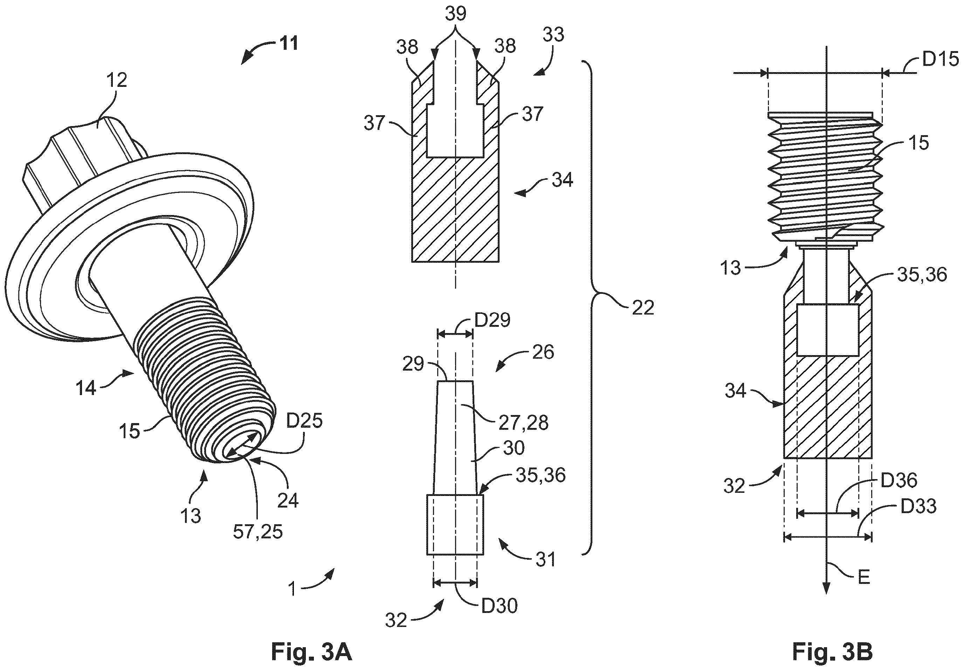

The basic context of screw 1 according to the invention in a connector 2 which can be part of a non-contact plug connection 3 shall first be explained with reference to Figures 1 and 2, before specific embodiments of screw 1 according to the invention are presented with reference to Figures 3 to 6.

Figure 1 shows an embodiment of a touch-proof plug connection 3 in the connected or closed state, respectively. Electrical plug connection 3 comprises an electrical connector 2 and an electrical mating connector 4. Electrical connector 2 comprises an electrically insulating connector housing 5, a contact element 6, and a screw 1 which can also be referred to as a fastening screw. The specific design of fastening screw 1 shall be discussed in detail later.

Contact element 6 is accommodated in connector housing 5 and is accessible along a connection direction V in which connector 3 is mechanically and electrically connected to its mating connector 4.

Mating connector 4 comprises a mating connector housing 7 in which mating contact element 8 is accommodated. In the connected state of plug connection 3, which is shown in Figure 1, contact element 6 of connector 3 is connected in an electrically conductive manner to mating contact element 8 of mating connector 4.

Contact element 6 can be connected to an electrical conductor 9, for example, a ribbon cable.

Contact element 6 has a passage bore 10 through which screw body 11 of screw 1 penetrates. Screw body 11 comprises a screw head 12 and a screw shank 14 originating from screw head 12 and extending along a screw-in direction E up to a screw tip 13. The screw shank is provided with a screw thread 15, in particular in the region of screw tip 13. Screw tip 13 and the part of screw shank 14 provided with screw thread 15 are arranged on contacting side 16 of connector housing 5 in the region of contact element 6. Connector 2 can be mechanically connected by way of screw thread 15 to an internal thread 17 of mating connector 4 and can be held in the connected state.

Screw head 12 is accessible from attachment side 18 of connector 3 and is provided with an interface 19 for the engagement of a tool with which fastening screw 1 can be acted upon by a torque. Interface 19 can be, for example, a hexagonal socket, a hexalobe socket, a slot, a Phillips recess or a hexagonal head or, as in the embodiment shown, a hexalobe head or some other standard.

Screw thread 15 can be any thread, where metric ISO threads (DIN 13-1) can be used, for example, a regular thread having a nominal size, e.g. M3, M4, M5, M6 or M8.

In the case of screw body 12, a press-on surface 20 is provided at the transition between screw head 12 and screw shank 14 and points in screw-in direction E and with which the force is transmitted to contact element 6. Press-on surface 20 is formed by the so-called bearing surface of screw head 12.

In order to configure connector 2 to be touch-proof on attachment side 18 as well, screw head 12 is covered with an electrically insulating protective cap 21 so that neither the tool nor a user's finger can come into contact with an electrically conductive area of screw 1 on attachment side 18 when screw 1 is tightened in order to connect connector 2 to mating connector 4 in a mechanical and electrically conductive manner.

As can be seen in particular in Figure 2, not only attachment side 18 but also oppositely disposed contacting side 16 of connector 2 is configured to be touch-proof due to screw 1 according to the invention with its touch protection element 22. Touch protection element 22 is there arranged and aligned on connector 1 in such a way that it excludes access to contact element 6 on contacting side 16 in conjunction with connector housing 5 because it blocks access opening 23, in particular for a human finger.

Figures 3A and B show a first embodiment of a screw 1 according to the invention for a touch-proof plug connection 3 which is comprised, for example, in connector 2 or plug connection 3 of Figure 1. Figure 3A shows a screw body 11 in a schematic perspective view. The elements of touch protection element 22 of this embodiment are shown schematically in a longitudinal sectional view. Figure 3B shows the region of screw shank 14 with screw thread 15 and screw tip 13 in the assembled state, i. e. with touch protection element 22 connected.

A connecting element 24 is formed on screw tip 13. Connecting element 24 can have a cavity 57 for receiving coupling side 26 of touch protection element 22. In the exemplary embodiment of Figure 3, connecting element 24 is configured as a blind bore hole 25 which, originating from screw tip 13, extends in a direction opposite to screw-in direction E into the interior of screw shank 14. Blind bore hole 25 has a predetermined blind bore hole diameter D25.

Touch protection element 22 is provided with a connection device 27 on a coupling side 26. Connection device 27 is configured as a complementary connection counterpart to connecting element 24 of screw body 11 for connecting touch protection element 22 to screw body 11. In the embodiment shown, the connection is made as a press connection. Touch protection element 22 has a pressing cone 28 as connection device 27. Pressing cone tip 29 on coupling side 26 has a diameter D29 which is smaller than diameter D25 of blind bore hole 25. Originating from pressing cone tip 29, pressing cone 28 widens up to a transition region 30. In this transition region 30, diameter D30 of pressing cone 28 is larger than diameter D25 of the blind bore hole. Touch protection element 22 can then be pressed with its pressing cone 28 into blind bore hole 25 and can be connected in a force-fit manner to the screw body by this press connection.

Touch protection element 22 of the embodiment from Figure 3 is formed not only by touch protection body 31 with pressing cone 28, but also by an insulating element 33 attachable to front side 32 of touch protection body 31 and shown separately in Figure 3A and in the assembled state in Figure 3B, i.e. shown attached to touch protection body 31

Front side 32 of touch protection body 31 is opposite to coupling side 26. In the assembled state, touch protection element 22 of Figure 3 is connected in screw-in direction E flush to screw shank 14 at screw tip 13. Outer diameter D33 of insulating element 33 is smaller than diameter D15 of screw thread 14 so that connected touch protection element 22 does not impair screw 1 when being screwed in.

In the embodiment shown, insulating element 33 is configured as an insulating cap 34 which, in the assembled state, covers front side 32 and the part of touch protection body 31, in particular its transition region 30, which in the connected state projects from screw tip 13.

In the embodiment shown, insulating cap 34 is connected in a positive-fit manner to touch protection body 31 by way of a latching connection or snap connection, respectively. Touch protection body 31 comprises a latch stop 35 on its front side. For this purpose, front side 32 of touch protection body 31 is configured in the shape of a mushroom head and forms a collar 36 having a collar diameter D36 that is larger than diameter D30 at the transition region and smaller than outer diameter D33 of insulating cap 34. Latch stop 35 formed by collar 36 points substantially in the direction of pressing cone tip 29.

Insulating cap 34 comprises latching arms 37 which can be deflected elastically and which form a snap connection with latch stop 35. Latching arms 37 comprise latching hooks 38 at their distal end which can be brought into engagement with latch stop 35 formed by collar 36 for securing insulating cap 34 in screw-in direction E axially on touch protection body 31, as shown in Figure 3B.Connected touch protection element 22 is then an electrically insulating surface on front side 32 which in the connected state of screw body 11 and touch protection element 22 points in screw-in direction E and ensures protection against contact. Latching hooks 38 form attachment devices 39 which are configured to connect insulating element 33 to touch protection body 31, in the embodiment in Figures 3A and B by way of a latching or snap connection.

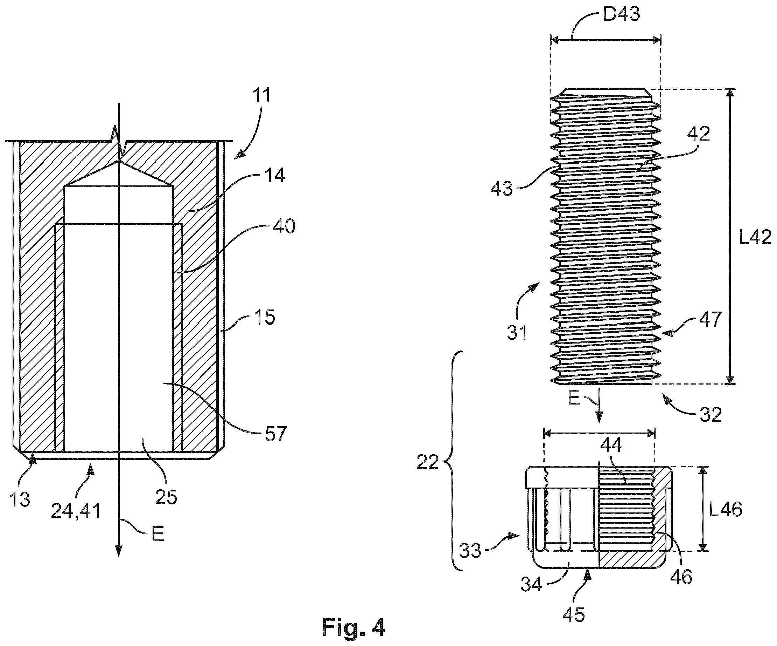

A further embodiment of a screw 1 according to the invention is illustrated hereafter with reference to Figure 4. Figure 4 shows only the front part of screw shank 14 with screw tip 13 and connecting element 24 in a schematic illustration in a longitudinal sectional view. Touch protection body 31 of touch protection element 22 is shown as a schematic side view and insulating element 33 partially in section in Figure 4 in a schematic side view.

Only the differences between this embodiment of the screw according to the invention in comparison to the previous embodiment of Figure 3 shall be discussed in more detail hereafter.

In the embodiment of Figure 4, screw shank 14 is also configured with a cavity 57 at its screw tip 13. Connecting element 24 is likewise of the blind bore hole 25 type. In contrast to the previous embodiment, blind bore hole 25 of connecting element 24 in Figure 4 is provided with an internal thread 40 as connecting element 24. Specifically, connecting element 24 in Figure 4 is configured as a blind bore hole thread 41 which enables a screw connection and thereby a positive-fit and force-fit connection between touch protection element 22 and screw body 11.

Touch protection body 31 is configured as a threaded rod 42 in the embodiment of Figure 4. Diameter D43 of rod thread 43 corresponds to internal thread 40 of blind bore hole thread 41 so that threaded rod 42 can be screwed into blind bore hole thread 41 Touch protection element 22 can be connected by way of rod thread 43 as a connection device 27 in a simple and structurally secure manner to connecting element 42 of screw body 11, namely to internal thread 40 of blind bore hole thread 41.

For the electrical insulation of front side 32 of threaded rod 42, an insulating element 33 is provided which is configured as an insulating cap 34. In contrast to the embodiment in Figure 3, insulating cap 34 of this embodiment comprises a cap thread 44 with which insulating cap 34 can be screwed onto front side 32 of threaded rod 42.

The embodiment of Figure 4 can be used modularly and flexibly, but is also inexpensive to produce, especially when standard threaded rods are used. The overall length of screw 11 and in particular of the region of touch protection element 22 can be precisely adjusted in a structurally simple manner by way of length L42. Insulating cap 34 is pot-shaped, where cap base 45 in the assembled state rests against front side 32 of threaded rod 42 and insulates it electrically. Lateral cap wall 46 covers lateral flanks 47 of threaded rod 42 on its front side 32 and insulates these regions. By choosing cap length L46, it can be determined in a simple manner over which length of threaded rod 42 its flanks 47 are to be insulated.

The modular structure of screw 1 according to the embodiment from Figure 4 allows for many different possible uses and allows for screw 1 to be reused, even in other environments. For this purpose, for example, only threaded rod 42 or insulating cap 34 would have to be exchanged and adapted to the changed geometry of new plug connection 3. This embodiment is also advantageous with regard to maintenance and repairs.

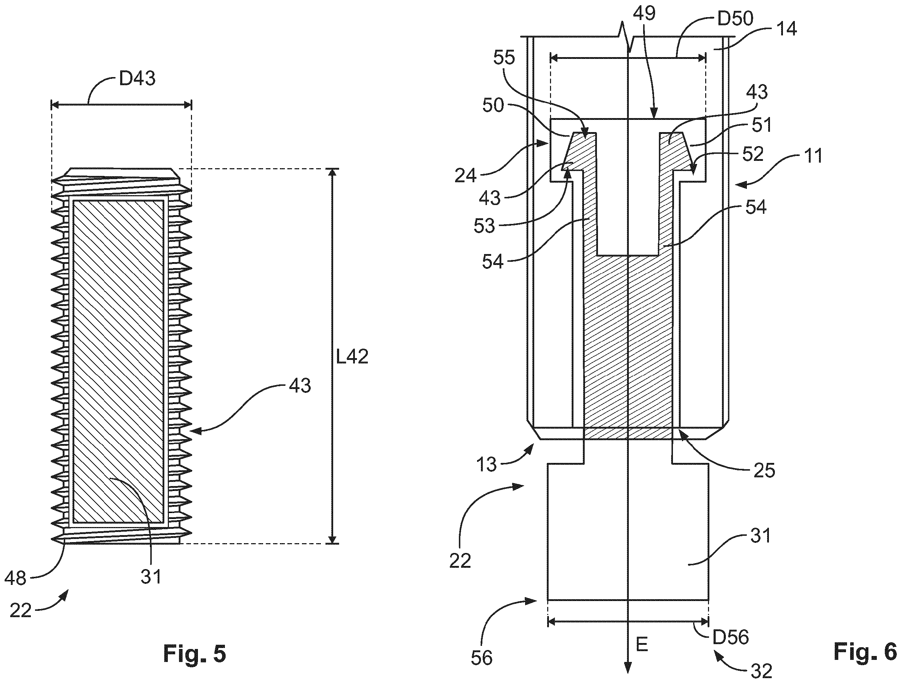

A further embodiment of a touch protection element 22 is shown in Figure 5. This embodiment comprises a touch protection element 22 with a rod-shaped touch protection body 31, which can be made, for example, from metal, which results in good strength. Touch protection body 31 is surrounded on all sides by a coating 48. Coating 48 is made from electrically insulating material and ensures that touch protection element 22 of this embodiment warrants the required touch-proof nature.

In the embodiment shown, the coating is formed with a rod thread 43 so that touch protection element 22 in the embodiment of Figure 5 assumes the shape of a threaded rod 42 that is electrically insulating toward the outside. An insulating cap 34 can be dispensed with in this embodiment. Insulating element 33 of Figure 5 is therefore electrically insulating coating 48. Coating 48 can be formed directly as a rod thread 43 around touch protection body 31, for example, in an injection molding process. It is also possible to first coat touch protection body 31 with coating 48 and to then form rod thread 43 into the coating.

Finally, a further embodiment of a screw 1 according to the invention shall also be discussed with reference to Figure 6. In Figure 6, front region 32 of screw body 11 with touch protection element 22 attached is shown schematically in a longitudinal sectional view.

Provided at screw tip 13 is again a blind bore hole 25 which, originating from screw tip 13, is formed into screw shank 14 in a direction opposite to screw-in direction E.

In this embodiment, a positive-fit connecting element 24 in the form of a latching device 58 is configured as connecting element 24. For this purpose, an undercut in the form of a projection 50, in which the diameter of blind bore hole 25 expands to a projection diameter D50, is provided at blind hole 49, i.e. the part of blind bore hole 25 which is disposed opposite the opening at screw tip 13. Due to projection 50, a circumferential groove 51 arises at blind hole 49 and provides a connecting shoulder 52 pointing in a direction opposite to screw-in direction E.

Connecting surfaces 53 of touch protection element 22 can be made to engage in a positive-fit manner with this connecting shoulder 52 in order to attach touch protection element 22 to connecting element 24.

Touch protection body 31 of touch protection element 22 is substantially cylindrical having dimensions that are complementary to diameter D25 of blind bore hole 25. Arranged on coupling side 26 of touch protection body 31 are elastically configurable connecting arms 54 as connection device 27. Connecting arms 54 extend away from touch protection body 31 substantially parallel to the longitudinal axis of touch protection body 31 which in the assembled state coincides with screw-in direction E. Latching hooks 38 are arranged at distal end 55 of connecting arms 54.

Touch protection element 22 of Figure 4 can be easily connected to screw body 11 by being inserted with latching hooks 38 first into blind bore hole 25. In doing so, connecting arms 54 are deflected inwardly towards one another until they lie in projection 50 shaped as a groove 51, where they spring back to their resting state. Connecting surfaces 53 of latching hooks 38 come into engagement with connecting shoulder 52 of groove 51 and touch protection element 22 is secured on screw body 11 in a positive-fit manner.

Touch protection body 51 of Figure 6 comprises a touch protection head 56 on its front side 32. Diameter D56 is widened in this region for achieving a better touch protection effect. However, diameter D56 of the touch protection head is smaller than diameter D15 of the screw thread.

Touch protection element 22 in the exemplary embodiment shown in Figure 6 is monolithic, i.e. manufactured integrally from plastic material, and can be produced, for example, by way of an injection molding process. This allows for cost-effective production of large quantities and implements both the electrically insulating properties as well as the formation of the elastically deformable connecting arms 54 with the connecting hooks.

### Reference Signs

- 1: screw
- 2: connector
- 3: plug connection
- 4: mating connector
- 5: connector housing
- 6: contact element
- 7: mating connector housing
- 8: mating contact element
- 9: electrical conductor
- 10: passage bore
- 11: screw body
- 12: screw head
- 13: screw tip
- 14: screw shank
- 15: screw thread
- 16: contacting side
- 17: internal thread
- 18: attachment side
- 19: interface
- 20: press-on surface
- 21: protective cap
- 22: touch protection element
- 23: access opening
- 24: connecting element
- 25: blind bore hole
- 26: coupling side
- 27: connection device
- 28: pressing cone
- 29: pressing cone tip
- 30: transition region
- 31: touch protection body
- 32: front side
- 33: insulating element
- 34: insulating cap
- 35: latch stop
- 36: collar
- 37: latching arm
- 38: latching hook
- 39: attachment device
- 40: internal thread
- 41: blind bore hole thread
- 42: threaded rod
- 43: rod thread
- 44: cap thread
- 45: cap base
- 46: cap wall
- 47: lateral flanks
- 48: insulating coating
- 49: blind hole
- 50: projection
- 51: groove
- 52: connecting step
- 53: connecting surface
- 54: connecting arm
- 55: distal end
- 56: touch protection head
- 57: cavity
- 58: latching device

- D15: diameter screw thread
- D25: diameter blind bore hole
- D29: diameter at the pressing cone tip
- D30: diameter transition region
- D33: diameter insulating element
- D36: diameter collar
- D43: diameter rod thread
- D50: diameter projection
- D56: diameter touch protection head
- E: screw-in direction
- L42: threaded rod length
- L46: cap wall length
- V: direction of connection

## Claims

1. Screw (1) for a touch-proof plug connection (3) comprising a screw body (11) and a touch protection element (22), where said screw body (11) comprises a screw head (12) and a screw shank (14) originating from said screw head (12) and extending along a screw-in direction (E) up to a screw tip (13), where a connecting element (24) is formed at said screw tip (13), where said touch protection element (22) is provided on a coupling side (26) with at least one connection device (27) which is configured as a connection counterpart to said connecting element (24) for connecting said touch protection element (22) to said screw body (11), and where said touch protection element (22) has at least on a front side (32) an electrically insulating surface which in the connected state of said screw body (11) and said contact protection element (22) points in the screw-in direction (E).

2. Screw according to claim 1, where the touch protection element (22) is connected to the screw body (11) by way of a positive-fit, frictionally engaged, and/or adhesive bond between the connection device (27) and the connecting element (24).

3. Screw (1) according to claim 1 or 2, where the touch protection element (22) is releasably connected to the screw body (11).

4. Screw (1) according to one of the claims 1 to 3, where the touch protection element (22) is sized such that, when viewed in the screw-in direction (E), it does not protrude beyond said screw shank (14) when connected to said screw body (11).

5. Screw (1) according to one of the claims 1 to 4, where said screw tip (13) has a cavity (57) for receiving the coupling side (26) of the touch protection element (22).

6. Screw (1) according to one of the claims 1 to 5, where the connecting element (24) comprises a thread (40) or latching device (58).

7. Screw (1) according to claim 5, where the cavity (57) has an internal thread (40).

8. Screw (1) according to one of the claims 1 to 7, where the touch protection element (22) is made from an electrically insulating material.

9. Screw (1) according to one of the claims 1 to 7, where the touch protection element (22) comprises a touch protection body (31) which is coated with an electrically insulating material at least on the front side (32).

10. Screw (1) according to claim 9, where the touch protection body (31) is covered on all sides by the electrically insulating material.

11. Screw (1) according to one of the claims 1 to 10, where the touch protection element (22) comprises a touch protection body (31) and an insulating element (33) that can be attached to the front side (32) of the touch protection body (31).

12. Screw (1) according to claim 11, where the insulating element (33) is provided with an attachment device (39) which is configured to connect the insulating element (33) to the touch protection body (31).

13. Screw (1) according to claim 12, where the insulating element (33) is connected to the touch protection body (31) in a positive-fit and/or force-fit manner.

14. Screw (1) according to one of the claims 11 to 13, where the insulating element (33) is an insulating cap (34).

15. Screw (1) according to one of the claims 9 to 14, where the touch protection body (31) is made from metal.
